# EUROPÄISCHE PATENTSCHRIFT

(11) **EP 1 776 409 B1**
(45) Veröffentlichungstag und Bekanntmachung des Hinweises auf die Patenterteilung: **07.05.2008**
(21) Anmeldenummer: 05777287.3
(22) Anmeldetag: 30.07.2005
(51) Int. Cl.: C08G 69/48, C08G 69/46

(54) **VERFAHREN ZUR HERSTELLUNG HOCHMOLEKULARER POLYAMIDE**
METHOD FOR THE PRODUCTION OF HIGH-MOLECULAR POLYAMIDES
PROCEDE DE PRODUCTION DE POLYAMIDES HAUTEMENT MOLECULAIRES

(30) Priorität: 04.08.2004 DE 102004038014
(43) Veröffentlichungstag der Anmeldung: 25.04.2007
(73) Patentinhaber: BASF SE, 67056 Ludwigshafen (DE)
(72) Erfinder: EIBECK, Peter, 67061 Ludwigshafen (DE); WARZELHAN, Volker, 67273 Weisenheim (DE); BRUCHMANN, Bernd, 67251 Freinsheim (DE)
(86) Internationale Anmeldenummer: PCT/EP2005/008275
(87) Internationale Veröffentlichungsnummer: WO 2006/015743

(56) Entgegenhaltungen:
- DE-A1- 1 595 603
- US-A- 5 280 060

## Beschreibung

Die Erfindung betrifft ein Verfahren zur Erhöhung des Molekulargewichtes von Polyamiden, dadurch gekennzeichnet, dass man ein Polyamid A) bei einer Temperatur von 150 bis 350°C mit einer Verbindung B), die bei dieser Umsetzungstemperatur lsocyansäure freisetzt oder mit Isocyansäure, die durch thermische Zersetzung der Verbindung B) separat hergestellt wird, umsetzt, wobei im eingesetzten Polyamid A) die Konzentration der Aminoendgruppen größer oder gleich der Konzentration der Carboxylendgruppen ist und das Molverhältnis von Verbindung B) zu den Aminoendgruppen des Polyamids 0,3:1 bis 1,5:1 beträgt.

Polyamide mit hohem Molekulargewicht weisen hohe Schmelzeviskositäten auf und werden insbesondere zum Extrudieren von Halbzeugen, z.B. Profilen, Platten oder Stäben, und zum Folienblasen eingesetzt. Bei diesen Verarbeitungsverfahren wirkt sich die hohe Schmelzeviskosität günstig auf die Verarbeitbarkeit und die Qualität der erhaltenen Produkte aus. Nach den Verfahren des Standes der Technik, siehe beispielsweise DE-A 3923061, werden hochmolekulare Polyamide in zwei Stufen hergestellt: zunächst wird beispielsweise in einer Schmelzekondensation aus den Monomeren ein niedermolekulares Polymer hergestellt, das danach in einer Festphasenkondensation zum hochmolekularen Endprodukt umgesetzt wird.

Diese zweistufige Polymerisation ist umständlich und es wäre vorteilhaft, die Festphasenkondensation umgehen zu können. Idealerweise sollte sich die Molekulargewichtserhöhung durch einfache Zugabe eines Additivs zum niedermolekularen Polyamid bewerkstelligen lassen, das rasch den erwünschten Molekulargewichtsaufbau herbeiführt.

Die WO 02/26865 beschreibt ein Verfahren zur Verminderung des Gehalts an ε-Caprolactam in Polyamid 6 (PA 6), bei dem ein durch Hitzeeinwirkung Isocyansäure bildendes Additiv, beispielsweise Harnstoff, entweder a) zur Polymerisation des PA 6 oder b) einer PA 6-Schmelze, zugefügt wird. In den meisten Beispielen wird der Harnstoff gegen Ende der Polymerisation zugesetzt; in Beispiel 15 wird ein handelsübliches PA 6-Granulat mit einer Harnstofflösung besprüht, getrocknet und bei 240 bis 260°C extrudiert. Die relative Lösungsviskosität der harnstoffbehandelten Polyamide unterscheidet sich nicht signifikant von derjenigen der nicht harnstoffhaltigen Vergleichsbeispiele, und in der Schrift fehlen jegliche Hinweise auf eine Erhöhung des Molekulargewichts. Angaben über die Aminoendgruppen- oder Carboxylendgruppen-Konzentration im Polyamid vor der Hamstoffzugabe werden nicht gemacht.

Es bestand die Aufgabe, den geschilderten Nachteilen abzuhelfen. Es sollte ein alternatives Verfahren zur Herstellung hochmolekularer Polyamide bereitgestellt werden. Vorzugsweise sollte es einfacher ausgestaltet sein als die Verfahren des Standes der Technik. Insbesondere sollte das Verfahren ohne eine Festphasenkondensation auskommen.

Idealerweise sollte die gewünschte Molekulargewichtserhöhung durch einfache Zugabe eines Additivs zu einem üblichen, nicht hochmolekularen Polyamid erreicht werden.

Demgemäß wurden das eingangs genannte Verfahren zur Herstellung hochmolekularer Polyamide sowie die damit erhältlichen Polyamide, deren Verwendung zur Herstellung von Formkörpern, Folien, Fasern und Filmen, und die Formkörper, Folien, Fasern und Filme aus den Polyamiden, gefunden. Außerdem wurde das eingangs genannte Verfahren zur Erhöhung des Molekulargewichts von Polyamiden gefunden.

### Komponente A): Polyamide

Bei dem erfindungsgemäßen Verfahren zur Herstellung hochmolekularer Polyamide wird ein Polyamid A) bei 150 bis 350°C mit einer Verbindung B) umgesetzt, die bei dieser Umsetzungstemperatur Isocyansäure freisetzt. Erfindungsgemäß ist im eingesetzten Polyamid A) die Konzentration der Aminoendgruppen (AEK, Aminoendgruppenkonzentration) größer oder gleich der Konzentration der Carboxylendgruppen (CEK, Carboxylendgruppenkonzentration), also AEK ≥ CEK.

Bevorzugt ist die Aminoendgruppenkonzentration größer als die Carboxylendgruppenkonzentration also AEK > CEK.

Die vorgenannten Konzentrationen sind wie üblich definiert als Anzahl Endgruppen (in Mol bzw. Äquivalent) pro Masseneinheit Polyamid, beispielsweise x mmol Endgruppen pro kg Polyamid.

Die Bestimmung der Aminoendgruppen kann man beispielsweise mittels Titration einer Lösung des Polyamids in Gegenwart eines Indikators durchführen. Dazu wird das Polyamid A) in einem Gemisch aus Phenol und Methanol (z.B. 75 Gew.-% Phenol und 25 Gew.-% Methanol) unter Erwärmen gelöst. Beispielsweise kann man die Mischung unter Rückfluss am Siedepunkt halten, bis das Polymer gelöst ist. Die abgekühlte Lösung wird mit einem geeigneten Indikator bzw. einer Indikatormischung (z.B. methanolische Lösung aus Benzylorange und Methylenblau) versetzt und mit einer methanolhaltigen Perchlorsäurelösung in Glycol, bis zum Farbumschlag titriert. Aus dem Perchlorsäureverbrauch wird die Aminoendgruppenkonzentration berechnet.

Alternativ kann man die Titration ohne Indikator auch potentiometrisch mit einer Perchlorsäurelösung in Ethylenglycol durchführen, wie in der WO 02/26865 auf Seite 11 beschrieben.

Die Bestimmung der Carboxylendgruppen kann man z.B. ebenfalls durch Titration einer Lösung des Polyamids unter Verwendung eines Indikators vornehmen. Dazu wird das Polyamid A) in Benzylalkohol (Phenylmethanol) unter Erwärmen z.B. bis zum Sieden, gelöst, wobei man ein Steigrohr aufsetzt und Stickstoffgas einleitet. Danach wird die noch heiße Lösung mit einem geeigneten Indikator (z.B. propanolische Lösung von Kresolrot) versetzt und sofort mit einer alkoholischen Kaliumhydroxidlösung (KOH gelöst in einer Mischung aus Methanol, 1-Propanol und 1-Hexanol) bis zum Farbumschlag titriert. Aus dem KOH-Verbrauch wird die Carboxylendruppenkonzentration berechnet.

Alternativ kann man die Titration ohne Indikator auch konduktometrisch mit einer NaOH-Lösung in Benzylalkohol durchführen, wie in der WO 02/26865 auf Seite 11-12 beschrieben.

Als Polyamid A) eignen sich prinzipiell alle bekannten Polyamide, sofern sie die genannte Bedingung AEK ≥ CEK erfüllen. In Betracht kommen beispielsweise Polyamide mit aliphatischem teilkristallinem oder teilaromatischem sowie amorphem Aufbau jeglicher Art und deren Blends, einschließlich Polyetheramiden wie Polyetherblockamiden.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, Di-(4-amono-3-methyl-cyclohexyl)-methan, Isophorondiamin, 1,5-Diamino-2-methyl-pentan, 2,2-Di-(4-aminophenyl)-propan oder 2,2-Di-(4-aminocyclohexyl)-propan.

Bevorzugte Polyamide sind Polyhexamethylenadipinsäureamid (PA 66) und Polyhexamethylensebacinsäureamid (PA 610), Polycaprolactam (PA 6) sowie Copolyamide 6/66, insbesondere mit einem Anteil von 5 bis 95 Gew.-% an Caprolactam-Einheiten. PA 6, PA 66 und Copolyamide 6/66 sind besonders bevorzugt; PA 6 ist ganz besonders bevorzugt.

Weitere geeignete Polyamide sind erhältlich aus ω-Aminoalkylnitrilen wie z.B. Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP-A 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 46). Herstellungsverfahren für Polyamide dieser Struktur sind z.B. in den EP-A 38 094, EP-A 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die Herstellung der teilaromatischen Copolyamide mit niedrigem Triamingehalt kann nach den in den EP-A 129 195 und 129 196 beschriebenen Verfahren erfolgen.

Die nachfolgende nicht abschließend Aufstellung enthält die genannten, sowie weitere Polyamide A) im Sinne der Erfindung und die enthaltenen Monomeren:
AB-Polymere:

| | |
|---|---|
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

AA/BB-Polymere:

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| | |
| PA 6T | Hexamethylendiamin, Terephthalsäure |
| PA MXD6 | m-Xylylendiamin, Adipinsäure |
| PA 61 | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/61610 | (siehe PA 66, PA 6 und PA 610) |
| PA 61/6T | (siehe PA 61 und PA 6T) |
| PA PACM 12 | Diaminodicyclohexylmethan, Laurinlactam |
| PA 61/6T/PACM | wie PA 61/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Diese Polyamide A) und ihre Herstellung sind bekannt, beispielsweise aus Ullmanns Encyklopädie der Technischen Chemie, 4. Auflage, Bd. 19, S. 39-54, Verlag Chemie, Weinheim 1980; Ullmanns Encyclopedia of Industrial Chemistry, Vol. A21, S. 179-206, VCH Verlag, Weinheim 1992; Stoeckhert, Kunststofflexikon, 8. Auflage, S. 425-428, Carl Hanser Verlag München 1992 (Stichwort "Polyamide" und folgende), sowie Saechtling, Kunststoff-Taschenbuch, 27. Ausgabe, Carl Hanser-Verlag München1998, Seiten 465-478.

Auf die Herstellung der bevorzugten Polyamide PA6, PA 66 und Copolyamid 6/66 wird nachfolgend kurz eingegangen.

Die Polymerisation bzw. Polykondensation der Ausgangsmonomere zum Polyamid A) wird vorzugsweise nach den üblichen Verfahren durchgeführt. So kann die Polymerisation des Caprolactams beispielsweise nach den in der DE-A 14 95 198 und DE-A 25 58 480 beschriebenen kontinuierlichen Verfahren erfolgen. Die Polymerisation von AH-Salz zur Herstellung von PA 66 kann nach dem üblichen diskontinuierlichen Verfahren (siehe: Polymerization Processes S. 424-467, insbesondere S. 444-446, Interscience, New York,1977) oder nach einem kontinuierlichen Verfahren, z.B. gemäß EP-A 129 196, erfolgen.

Bei der Polymerisation können übliche Kettenregler mitverwendet werden. Geeignete Kettenregler sind z.B. Triacetondiaminverbindungen (siehe WO-A 95/28443), und Basen, insbesondere Amine. Basen sind als Kettenregler bevorzugt, da sich mit ihnen der erforderliche Aminoendgruppenüberschuss bzw. -gleichstand (AEK ≥ CEK) auf einfache Weise einstellen lässt. Geeignete Basen sind z.B. Hexamethylendiamin, Bis(hexamethylen)triamin, Benzylamin, 1,4-Cyclohexyldiamin, Bis(tetramethylen)triamin, 4-Aminomethyl-1,8-octandiamin, Tris(3-aminopropyl)amin, N,N,N',N'-Tetra(3-aminopropyl)ethylendiamin, sowie die weiter oben genannten Diamine.

Sofern Kettenregler verwendet werden, beträgt ihre Menge in der Regel 0,01 bis 5, insbesondere 0,1 bis 1,5 Gew.-%, bezogen auf die bei der Herstellung der Polyamids A) eingesetzten Monomere.

Die erhaltene Polymerschmelze wird aus dem Reaktor ausgetragen, gekühlt und granuliert. Das erhaltene Granulat kann einer Nachpolymerisation unterworfen werden. Dies geschieht in an sich bekannter Weise durch Erwärmen des Granulats auf eine Temperatur T unterhalb der Schmelztemperatur Tₛ bzw. Kristallitschmelztemperatur Tₖ des Polyamids. Durch die Nachpolymerisation stellt sich das endgültige Molekulargewicht des Polyamids (messbar als Viskositätszahl VZ, siehe Angaben zur VZ weiter unten) ein. Üblicherweise dauert die Nachpolymerisation, falls erforderlich, 2 bis 24 Stunden, insbesondere 12 bis 24 Stunden. Wenn das gewünschte Molekulargewicht des Polyamids A) erreicht ist, wird das Granulat in üblicher Weise abgekühlt.

Das Polyamid A) kann statt als Granulat auch als Chips, Schnitzel oder in anderer üblicher Form eingesetzt werden. Ggf. wird das Polyamid A) bis auf einen Wassergehalt von 0,01 bis 0,1 Gew.-%, bezogen auf das Polyamid A), getrocknet. Dazu kann man übliche Trocknungsvorrichtungen verwenden, z.B. im Vakuum und/oder bei erhöhter Temperatur trocknen.

Die Herstellungsweise der Polyamide A) ist in der Regel nicht kritisch. Es ist lediglich zu gewährleisten, dass im eingesetzten Polyamid A) die Aminoendgruppenkonzentration größer oder gleich der Carboxylendgruppenkonzentration ist.

Geeignete Polyamide A) weisen im allgemeinen eine Viskositätszahl VZ von 50 bis 200, vorzugsweise 70 bis 160 und besonders bevorzugt 90 bis 130 ml/g auf, bestimmt gemäß ISO 307 EN an einer 0,5 gew.-%igen Lösung des Polyamids in 96 gew.-%iger Schwefelsäure bei 25°C.

Diesen Viskositätszahlen entsprechen übliche und hohe Molekulargewichte. Demnach kann man in dem erfindungsgemäßen Verfahren außer Polyamiden A) mit üblichem Molekulargewicht auch hochmolekulare Polyamide A) einsetzen und deren Molekulargewicht weiter erhöhen.

Es wurde gefunden, dass sich das Molekulargewicht des Polyamids A) besonders leicht und schnell erhöhen lässt, wenn zumindest ein Teil der Polymerketten des Polyamids A) zwei oder mehr Aminoendgruppen aufweist. In einer bevorzugten Ausführungsform ist das Verfahren dadurch gekennzeichnet, dass im Polyamid A) mindestens 20 mol-% der Polymerketten zwei oder mehr Aminoendgruppen aufweisen. Besonders bevorzugt beträgt dieser Anteil mindestens 30 mol-%.

### Komponente B): Isocyansäure freisetzende Verbindungen

Als Verbindung B) sind alle Verbindungen geeignet, die bei 150 bis 350°C Isocyansäure freisetzen. Eine solche Isocyansäurequelle sind z.B. Harnstoff, Kondensationsprodukte des Harnstoffs wie Biuret, Triuret oder Cyanursäure, sowie andere Hamstoffderivate bzw. oligomere oder polymere Harnstoffverbindungen, die bei der genannten Umsetzungstemperatur Isocyansäure freisetzen. Solche Verbindungen sind insbesondere Carbamate wie Silylcarbamat, Trimethylsilylcarbamat, sowie Trimethylsilylharnstoff oder Poly(nonamehtylen)harnstoff.

Bevorzugt ist die Verbindung B) ausgewählt aus Harnstoff, Biuret, Triuret, Cyanursäure, Silylcarbamat, Trimethylsilylcarbamat, Trimethylsilylharnstoff und Poly(nonamethylen)harnstoff. Besonders bevorzugt verwendet man Harnstoff, Biuret, Triuret oder Cyanursäure, insbesondere Harnstoff.

Man kann die Verbindung B) als solche mit dem Polyamid A) umsetzen, wobei aufgrund der genannten Temperatur die Isocyansäure während der Umsetzung entsteht. Dies ist bevorzugt. Alternativ kann man die Isocyansäure zunächst separat aus den genannten Isocyansäurequellen (z.B. Harnstoffen, Biuret, Triuret, Cyanursäure, Carbamaten) durch thermische Zersetzung herstellen und danach diese separat hergestellte Isocyansäure mit dem Polyamid A) umsetzen. Die thermische Zersetzung der Isocyansäurequelle kann durch Erwärmen, oder auch durch Energieeintrag über elektromagnetische Strahlung, ausgelöst werden.

Man verwendet die Verbindung B) in einer solchen Menge, dass das Molverhältnis von Verbindung B) zu den Aminoendgruppen des Polyamids A), 0,3 : 1 bis 1,5 : 1 und besonders bevorzugt 0,5 : 1 bis 0,8 : 1 beträgt. Sofern 1 mol der Verbindung B) mehr als 1 mol Isocyansäure freisetzt, ist entsprechend weniger Verbindung B) zu verwenden, d.h. das genannte Molverhältnis bezieht sich strenggenommen auf die aus der Verbindung B) freigesetzte Isocyansäure.

Die Verbindungen B) sind handelsüblich bzw. ihre Herstellung ist dem Fachmann bekannt.

Die Verbindung B) kann als solche, oder gelöst bzw. suspendiert in einem geeigneten Lösungs-bzw. Suspensionsmittel verwendet werden. Als Lösungsmittel eignen sich beispielsweise Alkohole mit 1 bis 10 C-Atomen, insbesondere Methanol, Ethanol oder die Propanole.

### Optionale Komponente C): Kupferverbindungen

Es wurde gefunden, dass bei dem erfindungsgemäßen Verfahren das Molekulargewicht des Polyamids dann besonders stark zunimmt, wenn Kupferverbindungen C) mitverwendet werden. Sie werden daher insbesondere dann mitverwendet, wenn Polyamide mit besonders hohem Molekulargewicht hergestellt werden sollen.

Demnach ist das Verfahren bevorzugt dadurch gekennzeichnet, dass man zusätzlich zu den Komponenten A) und B) eine Kupferverbindung C) mitverwendet.

Geeignete Kupferverbindungen C) sind insbesondere solche des ein- oder zweiwertigen Kupfers. Geeignet sind z.B. die Salze des ein- oder zweiwertigen Kupfers mit anorganischen oder organischen Säuren oder ein- oder mehrwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen. Vorzugsweise verwendet man die Cu(I)- und Cu(II)-Salze der Halogenwasserstoffsäuren, der Cyanwasserstoffsäure oder die Kupfersalze der aliphatischen Carbonsäuren. Besonders bevorzugt sind die einwertigen Kupferverbindungen CuCl, CuBr, Cul, CuCN und Cu₂O, sowie die zweiwertigen Kupferverbindungen CuCl₂, CuSO₄, CuO, Kupfer(II)-acetat oder Kupfer(II)stearat.

Sofern eine Kupferverbindung C) mitverwendet wird, beträgt ihre Menge 0,001 bis 1, bevorzugt 0,005 bis 0,5, insbesondere 0,005 bis 0,3 und besonders bevorzugt 0,01 bis 0,2 Gew.-%, bezogen auf die Summe der Komponenten A), B) und C).

Die Kupferverbindungen C) sind handelsüblich bzw. ihre Herstellung ist dem Fachmann bekannt.

Die Kupferverbindung C) kann als solche, oder bevorzugt in Form von Konzentraten eingesetzt werden. Unter Konzentrat ist ein Polymer zu verstehen, dass die Kupferverbindung in großer Menge, beispielsweise 1 bis 30 Gew.-% bezogen auf das Konzentrat, enthält. Das Polymer hat bevorzugt eine gleiche oder ähnliche chemische Natur wie das Polyamid A), ist also bevorzugt ebenfalls ein Polyamid. Die Verwendung von Konzentraten ist ein übliches Verfahren insbesondere zur Dosierung kleiner Mengen eines Einsatzstoffes zu einem Polymer.

Es versteht sich, dass auch Mischungen mehrerer Polyamide A), Isocyansäure freisetzenden Verbindungen B) und ggf. Kupferverbindungen C), verwendet werden können. In diesem Fall beziehen sich die Mengenangaben zu Komponente B) bzw. C) auf die Summe aller Komponenten B'), B"), etc. bzw. C'), C"), etc.

### Weitere Komponenten

Als weitere Komponenten kommen insbesondere in Polymeren oder bei deren Herstellung üblicherweise verwendete Zusatzstoffe bzw. Verarbeitungshilfsmittel in Betracht. Die erforderlichen Mengen variieren je nach Zusatzstoff bzw. Hilfsmittel und richten sich in bekannter Weise u.a. nach der beabsichtigten Verwendung des hochmolekularen Polyamids. Siehe z.B. Gächter / Müller, Plastics Additives Handbook, 4th ed., Hanser-Verlag München1993, reprint Nov. 1996

Die Zusatzstoffe bzw. Hilfsmittel können entweder bereits bei dem erfindungsgemäßen Verfahren, also der Herstellung des hochmolekularen Polyamids aus den Komponenten A), B) und ggf. C), mitverwendet werden, oder man kann erst das hochmolekulare Polyamid herstellen und später in einem weiteren Schritt (sog. Compoundierung) dem hochmolekularen Polyamid die Zusatzstoffe bzw. Verarbeitungshilfsmittel zugeben.

Geeignete Zusatzstoffe bzw. Verarbeitungshilfsmittel sind z.B. Gleit- oder Entformungsmittel, Kautschuke, Antioxidantien, Stabilisatoren gegen Lichteinwirkung, Antistatika, Flammschutzmittel, faser- und pulverförmige Füll- oder Verstärkungsmittel, Nukleierungsmittel, organische oder anorganische Farbmittel (Farbstoffe oder Pigmente) sowie andere Zusatzstoffe, oder deren Mischungen.

Geeignete Gleit- und Entformungsmittel sind z.B. Stearinsäuren, Stearylalkohol, Stearinsäureester oder -amide, Siliconöle, Metallstearate, Montanwachse und solche auf Basis von Polyethylen und Polypropylen.

Geeignete Antioxidantien (Wärmestabilisatoren) sind etwa sterisch gehinderte Phenole, Hydrochinone, Arylamine, Phosphite, verschiedene substituierte Vertreter dieser Gruppe, sowie deren Mischungen. Sie sind etwa als Topanol®, Irgafos®, Irganox® oder Naugard® im Handel erhältlich. Auch die Kupferverbindungen C) können als Antioxidantien wirken, insbesondere zusammen mit Metallhalogeniden, vorzugsweise Alkalimetallhalogeniden, z.B. Nal, Kl, NaBr oder KBr.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® kommerziell erhältlich sind.

Geeignete Antistatika sind beispielsweise Aminderivate wie N,N-Bis(hydroxyalkyl)-alkylamine oder -alkylenamine, Polyethylenglycolester oder Glycerinmono- und -distearate, sowie deren Mischungen.

Geeignete Flammschutzmittel sind z.B. die dem Fachmann bekannten halogenhaltigen oder phosphorhaltigen Verbindungen, Magnesiumhydroxid, roter Phosphor, sowie andere gebräuchliche Verbindungen oder deren Mischungen.

Als Beispiele für faserförmige bzw. pulverförmige Füll- und Verstärkungsstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich z.B. Ruß, amorphe Kieselsäure, Magnesiucarbonat, Calciumcarbonat, Kreide, gepulverter Quarz, Glimmer, Mica, Bentonite, Talkum, Feldspat oder insbesondere Calciumsilikate wie Wollastonit und Kaolin.

Geeignete Nukleierungsmittel sind z.B. Talkum, Ruß, Polyamide mit höherem Schmelzpunkt als Komponente A), Fluorpolymere wie Polytetrafluorethylen (PTFE), Titandioxid, Calciumphenylphosphinat, Aluminiumoxid, Magnesiumoxid oder andere Metalloxide oder -carbonate.

Als Farbmittel komme alle organischen bzw. anorganischen Farbstoffe bzw. Pigmente in Betracht, die zur Einfärbung von Polymeren geeignet sind, siehe z.B. Plastics Additives Handbook, Seiten 637 - 708.

### Umsetzung der Komponenten

Erfindungsgemäß setzt man das Polyamid A) mit der Isocyansäure freisetzenden Verbindung B) und ggf. der Kupferverbindung C) bei 150 bis 350°C um. Dabei ist die Umsetzungstemperatur innerhalb dieses Bereiches derart zu wählen, dass die Verbindung B) Isocyansäure freisetzt, d.h. die erforderliche Mindesttemperatur hängt u.a. von der Verbindung B) ab.

Bevorzugt findet die Umsetzung in einer Schmelze des Polyamids A) statt, und die Temperaturuntergrenze ergibt sich in diesem Fall auch aus der Erweichungstemperatur des Polyamids. Die Temperaturobergrenze wird in der Regel durch die thermischen Beständigkeit des Polyamids bestimmt, und die Temperatur wird üblicherweise so gewählt, dass eine thermische Schädigung des Polyamids vermieden wird. Bevorzugt beträgt die Umsetzungstemperatur 200 bis 300, besonders bevorzugt 240 bis 280°C.

Der bei der Umsetzung herrschende Druck ist üblicherweise nicht kritisch.

Das erfindungsgemäße Verfahren kann diskontinuierlich oder kontinuierlich durchgeführt werden. Dazu eignen sich übliche Mischvorrichtungen, beispielsweise Mischer, Kneter oder- bevorzugt- Extruder. Sie sind üblicherweise temperierbar, um die zur Umsetzung erforderliche Temperatur einzustellen, wobei meist ein Teil der Wärmeenergie bereits durch die mit dem Mischvorgang einhergehende Scherung erzeugt wird, und der restliche Teil durch Beheizung der Mischvorrichtung zugeführt wird.

Als Mischer eigen sich insbesondere Mischer mit sich bewegenden Werkzeugen, z.B. Schneckenbandmischer, Doppelspiralenmischer, Schaufelmischer, Pflugscharmischer, Paddelmischer, langsam oder schnell laufende Tragmischer, Kegelschneckenmischer, Silo-Senkrecht-Schneckenmischer, Rührwerksmischer (auch Rührwerksplanetenmischer) oder Walzwerke, die je nach Bauart diskontinuierlich oder kontinuierlich betrieben werden.

Geeignete Kneter sind z.B. Stempelkneter und Trogkneter (auch doppelschaufelige).

Als Extruder kommen alle üblichen Schneckenmaschinen in Betracht, insbesondere Einschnecken- und Doppelschneckenextruder (z.B. Typ ZSK von Fa. Coperion bzw. Werner & Pfleiderer), Ko-Kneter, Kombiplast-Maschinen, MPC-Knetmischer, FCM-Mischer, KEX-Knetschneckenextruder und Scherwalzenextruder. Bevorzugt findet die Umsetzung in einem Extruder statt.

Einzelheiten zu den genannten und sonstigen, ebenfalls geeigneten Mischvorrichtungen nennt z.B. das erwähnte Kunststoff-Taschenbuch von Saechtling auf Seite 202 - 250.

Die Mischvorrichtung und ihre Ausgestaltung, insbesondere die Art und Drehzahl des Mischwerkzeugs sowie die zugeführten Mengen und der Durchsatz der Mischvorrichtung werden in bekannter Weise derart gewählt, dass die Verbindung B) Isocyansäure freisetzen und diese, sowie ggf. auch die Kupferverbindung C), mit dem Polyamid A) reagieren kann. Beim Extruder können beispielsweise Drehzahl, Länge, Durchmesser und Ausgestaltung der Extruderschnecke(n) (z.B. Gangzahl und -tiefe, Steigung, Abfolge von fördernden, Knet- und Misch-Elementen entlang der Schnecke) entsprechend variiert werden.

Die Reaktionszeit (Dauer der Umsetzung) beträgt in der Regel 10 sec bis 60 min, bevorzugt 20 sec bis 30 min und insbesondere 25 sec min bis 10 min. Bei kontinuierlichen Mischvorrichtungen ist mit Reaktionszeit die mittlere Verweilzeit z.B. im Extruder, gemeint.

Man kann die Komponenten A), B) und ggf. C) zunächst "kalt" vormischen und diese Mischung der Mischvorrichtung zuführen, in der bei der Umsetzungstemperatur die Umsetzung stattfindet. Beispielsweise kann man die Verbindung B) auf das feste Polyamid A) aufbringen, und das derart behandelte Polyamid, ggf. zusammen mit der Kupferverbindung C), im Extruder bei der Umsetzungstemperatur vermischen und die Mischung extrudieren. Diese Ausführungsform ist bevorzugt.

Bei dieser Ausführungsform kann das Aufbringen der Verbindung B) auf das Polyamid A) beispielsweise durch Besprühen des Polyamidgranulats mit einer Lösung oder Suspension der Verbindung B), oder durch Auftrommein einer solchen Lösung bzw. Suspension auf das Polyamid A), erfolgen. Als Lösung von B) eignet sich z.B. eine alkoholische Lösung, etwa in Ethanol. Nach dem Entfernen des Lösungsmittels (z.B. im Vakuum und/oder bei erhöhter Temperatur) wird das mit Verbindung B) behandelte Polyamidgranulat, ggf. zusammen mit der Kupferverbindung C), dem Extruder zugeführt, wo die Umsetzung stattfindet.

Alternativ kann man einige der Komponenten in die Mischvorrichtung geben und auf die Umsetzungstemperatur erhitzen, und die restlichen Komponenten direkt in die Mischvorrichtung dosieren. Beispielsweise kann man zunächst das Polyamid A) im Extruder oder einer anderen Mischvorrichtung aufschmelzen und die Komponenten B) und ggf. C) direkt in den Extruder dosieren. Ebenso kann man alle Komponenten getrennt voneinander in die Mischvorrichtung geben. Sofern man eine Kupferverbindung C) mitverwendet, gibt man sie bevorzugt vor oder zusammen mit der Verbindung B) in die Mischvorrichtung.

In jedem Falle wird als Produkt ein hochmolekulares Polyamid erhalten. Das aus der Mischvorrichtung abgezogene hochmolekulare Polyamid ist in der Regel schmelzflüssig. Es wird in üblicher Weise verfestigt, beispielsweise durch ein Wasserbad geleitet, und granuliert oder auf andere Weise zerteilt.

Wie erwähnt kann man entweder bereits bei der Herstellung des hochmolekularen Polyamids, oder in einem nachgeschalteten Compoundierschritt, die genannten üblichen Zusatzstoffe oder Verarbeitungshilfsmittel zufügen.

Bevorzugt ist das erfindungsgemäße Verfahren dadurch gekennzeichnet, dass das erhaltene hochmolekulare Polyamid eine Viskositätszahl (VZ) von 120 bis 400 ml/g aufweist, bestimmt gemäß ISO 307 EN an einer 0,5 gew.-%igen Lösung des Polyamids in 96 gew.-%iger Schwefelsäure bei 25°C. Besonders bevorzugt beträgt die Viskositätszahl 150 bis 350, insbesondere 180 bis 320 ml/g.

Ebenfalls bevorzugt ist das Verfahren dadurch gekennzeichnet, dass das hochmolekulare Polyamid flüchtige Basen (FB) aufweist. Die Konzentration der flüchtigen Basen hängt beispielsweise von der Carbonylendgruppenkonzentration des Polyamids A) und der eingesetzten Menge von Verbindung B) ab und beträgt vorzugsweise mindestens 1 mmol FB pro kg hochmolekulares Polyamid.

Die Bestimmung der flüchtigen Basen kann man beispielsweise mittels saurer Hydrolyse des hochmolekularen Polyamids, Freisetzung der Basen durch Zugabe einer starken Base, Überdestillieren der freiwerdenden Basen in eine saure Vorlage und Rücktitration der überschüssigen Vorlage-Säure in Gegenwart eines Indikators durchführen. Dazu wird beispielsweise das hochmolekulare Polyamid zunächst durch Kochen mit Salzsäure bei aufgesetztem Steigrohr hydrolisiert. Nach dem Abkühlen der Mischung wird das Steigrohr durch Tropftrichter und Destillationsbrücke ausgetauscht, NaOH im Überschuss zugetropft und die freiwerdenden Basen in eine Vorlage überdestilliert, wo sie von überschüssiger Salzsäure aufgenommen werden. Anschließend wird die überschüssige Salzsäure der Vorlage mit NaOH und Bromkresolrot als Indikator zurücktitriert und aus dem NaOH-Verbrauch die Konzentratrion an freier Base berechnet.

Gegenstand der Erfindung ist neben dem Verfahren zur Herstellung des hochmolekularen Polyamids, auch das nach diesem Verfahren erhältliche hochmolekulare Polyamid.

Das hochmolekulare Polyamid kann als solches, oder abgemischt mit anderen Polymeren, d.h. in einem Polymerblend, verwendet werden. Solche anderen Polymere sind insbesondere übliche Polyamide (siehe Beschreibung der Komponente A)), und Kautschukpolymere, die das Polyamid schlagzäh modifizieren. Geeigente Kautschukpolymere sind insbesondere Dienkautschuke wie Polybutadien oder Styrol-Butadien-Copolymere, Acrylatkautschuke wie Poly-n-butylacrylat, Ethylenkautschuke wie EPM und EPDM (Ethylen-Propylen-(Dien)-Monomer), und Silikonkautschuke. Der Kautschuk kann auch als Kern-Schale-Kautschuk (Pfropfkautschuk), statistischer Copolymerkautschuk oder Blockcopolymerkautschuk aufgebaut sein.

Aus dem hochmolekularen Polyamid lasen sich Formkörper aller Art, Folien, Fasern (auch Filamente und Monofile) und Schäume herstellen.

Das erfindungsgemäße Herstellungsverfahren ist einfacher als die Verfahren des Standes der Technik und kommt ohne aufwändige Festphasenkondensation aus. Die gewünschte Molekulargewichtserhöhung wird in besonders problemloser Weise durch einfache Zugabe von Harnstoff oder einer anderen Isocyansäure freisetzenden Verbindung zu einem üblichen, nicht hochmolekularen Polyamid erreicht.

### Beispiele:

Alle Druckangaben sind Absolutdrucke. Es wurden folgende Einsatzstoffe verwendet, wobei weitere Eigenschaften der Polyamide in Tabelle 1 angegeben sind:
A1: Polyamid 6, hergestellt mit Hexamethylendiamin als Kettenregler;
   AEK > CEK
A2: Polyamid 6, hergestellt mit Bis(hexamethylen)triamin als Kettenregler;
   AEK > CEK
A3: Polyamid 6, hergestellt mit Adipinsäure als Kettenregler;
   AEK < CEK (zum Vergleich)
A4: Polyamid 6, hergestellt mit Propionsäure als Kettenregler;
   AEK < CEK (zum Vergleich)
B: Harnstoff, als 15 gew.-%ige Lösung in absolutem Ethanol
C: Kupfer(I)iodid, als Konzentrat aus 95 Gew.-% Polyamid 6 und 5 Gew.-% Cul

Das als Granulat vorliegende Polyamid wurde bei 80°C im Vakuum (< 100 mbar) auf einen Wassergehalt < 0,1 Gew.-% getrocknet.

Der Harnstoff wurde auf das getrocknete Polyamidgranulat aufgebracht, indem die ethanolische Harnstofflösung bei 25°C auf das Granulat unter teilweisem Verdunsten des Ethanols aufgetrommelt wurde. Dabei wurde die Menge der Harnstofflösung derart bemessen, dass das erhaltene Granulat den in Tabelle 1 angegebenen Harnstoffgehalt aufwies. Anschließend trocknete man das auf diese Weise behandelte Granulat etwa 2 Stunden bei 40°C im Vakuum (< 100 mbar), um Reste anhaftenden Ethanols zu entfernen.

Das mit Harnstoff behandelte Granulat wurde - ggf. zusammen mit dem Cul-Konzentrat in einer Menge, dass das Polymer den in Tabelle 1 angegebenen Cul-Gehalt aufwies - einem Doppelschneckenextruder Typ Haake PTW 16 zugeführt, darin durchmischt und die Mischung extrudiert. Die Extrudertemperatur betrug 260°C, die Schneckendrehzahl 200 Upm und der Durchsatz 1 kg/h.

Das extrudierte hochmolekulare Polyamid wurde durch Wasserbad geführt, granuliert und das Granulat bei 80°C unter Vakuum (< 100 mbar) auf einen Wassergehalt < 0,1 Gew.-% getrocknet.

Am Einsatzstoff Polyamid A) bzw. am Produkt hochmolekulares Polyamid wurden folgende Eigenschaften bestimmt:

Viskositätszahl VZ: bestimmt gemäß ISO 307 EN an einer 0,5 gew.-%igen Lösung des Polymeren in 96 gew.-%iger Schwefelsäure bei 25°C.

Aminoendgruppenkonzentration AEK: Zu 1 g des Polymers wurden 25 ml eines Gemisches aus 75 Gew.-% Phenol und 25 Gew.-% Methanol gegeben und unter Rühren und Rückfluss 20 min sieden gelassen. Danach ließ man die Mischung auf 20°C abkühlen und gab 3 Tropfen einer Indikatorlösung (65 mg Benzylorange und 35 mg Methylenblau in Methanol lösen und mit Methanol auf 100 ml auffüllen). Anschließend wurde mit einer 0,02 N Perchlorsäurelösung (1,72 ml 70 %ige Perchlorsäure mit 100 ml Methanol versetzen, mit Etylenglycol auf 1000 ml auffüllen) bis zum Farbumschlag von grün nach rot titriert und aus dem Perchlorsäureverbrauch die AEK berechnet.

Carboxylendgruppenkonzentration CEK: Zu 1 g des Polymers wurden 25 ml Benzylalkohol gegeben und unter Rühren mit aufgesetztem Steigrohr und Stickstoffgaseinleitung 25 min sieden gelassen. Anschließend gab man zur noch heißen Mischung 6 Tropfen einer Indikatorlösung (100 mg Kresolrot in 100 ml 1-Propanol lösen) und titrierte sofort mit einer 0.02 N Kaliumhydroxidlösung (5,61 g KOH in Methanol lösen und mit Methanol auf 100 ml auffüllen, von dieser Lösung 20 ml mit 430 ml 1-Propanol und 550 ml 1-Hexanol auf 1000 ml auffüllen) bis zum Farbumschlag von gelb nach violett. Aus dem KOH-Verbrauch wurde die CEK berechnet.

Flüchtige Basen FB: Zu 5 g des Polymers gab man 100 ml 10 gew.-%ige Salzsäure und ließ bei aufgesetztem Steigrohr 4 Stunden sieden. Danach wurde auf 20°C abkühlen gelassen und das Steigrohr durch eine Destillationsbrücke mit Tropftrichter ersetzt. Man verwendete eine mit 10 ml 0,1 N Salzsäure gefüllte Vorlage, wobei das Rohrende der Destillationsbrücke in die Salzsäure eintauchte. Innerhalb von 5 min wurden 70 ml einer 20 gew.-%igen Natronlauge zugetropft und danach aus der so erhaltenen Mischung 30 ml in die Vorlage überdestilliert. Der Inhalt der Vorlage wurde mit einigen Tropfen einer Indikatorlösung (Bromkresolrot, 1 gew.-%ig in 20 gew.-%igem Ethanol) einer 0,1 N Natronlauge bis zum Farbumschlag von gelb nach blau titriert und aus dem NaOH-Verbrauch der Gehalt an flüchtigen Basen berechnet.

AEK, CEK und FB sind in mmol pro kg Polymer angegeben. Die Tabellen 1 und 2 fassen die Zusammensetzungen und die Messergebnisse zusammen.

**Tabelle 1: Einsatzstoffe**

| Bsp. | Polyamid A | | | | Harnstoff B ²⁾ | | Kupfer(I)-iodid C ²⁾ [Gew.-%] |
|---|---|---|---|---|---|---|---|
| | | VZ | AEK ¹⁾ | CEK ¹⁾ | [mmol/kg] | [Gew.-%] | |
| | | [ml/g] | [mmol/kg] | [mmol/kg] | | | |
| V1 | A3 | 129 | 22 | 77 | 33 | 0,2 | - |
| V2 | A4 | 150 | 35 | 51 | 33 | 0,2 | - |
| V3 | A4 | 150 | 35 | 51 | 133 | 0,8 | - |
| 1 | A1 | 112 | 103 | 32 | 33 | 0,2 | - |
| 2 | A1 | 112 | 103 | 32 | 50 | 0,3 | - |
| 3 | A1 | 112 | 103 | 32 | 83 | 0,5 | - |
| 4 | A1 | 112 | 103 | 32 | 133 | 0,8 | - |
| 5 | A1 | 112 | 103 | 32 | 33 | 0,2 | 0,015 |
| 6 | A1 | 112 | 103 | 32 | 50 | 0,3 | 0,015 |
| 7 | A2 | 119 | 125 | 24 | 33 | 0,2 | - |
| 8 | A2 | 119 | 125 | 24 | 83 | 0,5 | - |

| | | | | | | | |
|---|---|---|---|---|---|---|---|
| ¹⁾ AEK bzw. CEK des Polyamids A (vor Zusatz von Harnstoff B und Kupfer(I)iodid C) ²⁾ bezogen auf Summe Polyamid A + Harnstoff B + Kupfer(I)iodid C | | | | | | | |

**Tabelle 2: Eigenschaften des erhaltenen hochmolekularen Polyamids (nb nicht bestimmt)**

| Bsp. | VZ | AEK | CEK | FB |
|---|---|---|---|---|
| | [ml/g] | [mmol/kg] | [mmol/kg] | [mmol/kg] |
| V1 | 121 | 19 | 68 | 27 |
| V2 | 166 | 26 | 36 | 14 |
| V3 | 132 | 19 | 13 | 68 |
| 1 | 184 | 50 | 26 | 7 |
| 2 | 188 | 43 | 21 | 12 |
| 3 | 191 | 26 | 17 | 31 |
| 4 | 166 | 24 | 11 | 54 |
| 5 | 197 | 45 | 29 | 3 |
| 6 | 207 | 36 | 22 | 10 |
| 7 | 208 | 79 | 20 | nb |
| 8 | 267 | 44 | 13 | nb |

Die Beispiele zeigen, dass sich mit dem erfindungsgemäßen Verfahren auf sehr einfache Weise hochmolekulare Polyamide herstellen ließen: bei den erfindungsgemäßen Beispielen 1 bis 8 war die Viskositätszahl des erhaltenen Polyamids wesentlich höher als die des eingesetzten Polyamids. Hingegen wurde bei den nicht erfindungsgemäßen Beispielen (AEK < CEK im eingesetzten Polyamid) nur ein geringe VZ-Zunahme (Beispiel V2) oder sogar eine Abnahme der VZ, also ein Molekulargewichtsabbau, beobachtet (Beispiele V1, V3).

Durch Mitverwendung einer Kupferverbindung konnten besonders hohe Molekulargewichte erzielt werden, wie der Vergleich der ansonsten identischen Beispiele 5 mit 1, bzw. 6 mit 2, zeigt.

## Patentansprüche

1. Verfahren zur Erhöhung des Molekulargewichtes von Polyamiden, **dadurch gekennzeichnet, dass** man ein Polyamid A) bei einer Temperatur von 150 bis 350°C mit einer Verbindung B), die bei dieser Umsetzungstemperatur lsocyansäure freisetzt oder mit Isocyansäure, die durch thermische Zersetzung der Verbindung B) separat hergestellt wird, umsetzt, wobei im eingesetzten Polyamid A) die Konzentration der Aminoendgruppen größer oder gleich der Konzentration der Carboxylendgruppen ist und das Molverhältnis von Verbindung B) zu den Aminoendgruppen des Polyamids 0,3:1 bis 1,5:1 beträgt.

2. Verfahren nach Anspruch 1, **dadurch gekennzeichnet, dass** die Verbindung B) ausgewählt ist aus Harnstoff, Biuret, Triuret, Cyanursäure, Silylcarbamat, Trimethylsilylcarbamat, Trimethylsilylharnstoff und Poly(nonamethylen)harnstoff.

3. Verfahren nach den Ansprüchen 1 oder 2, **dadurch gekennzeichnet, dass** im Polyamid A) mindestens 20 mol-% der Polymerketten zwei oder mehr Aminoendgruppen aufweisen.

4. Verfahren nach den Ansprüchen 1 bis 3, **dadurch gekennzeichnet, dass** man zusätzlich zu den Komponenten A) und B) eine Kupferverbindung C) mitverwendet.

5. Verfahren nach den Ansprüchen 1 bis 4, **dadurch gekennzeichnet, dass** die Menge der Kupferverbindung C) 0,005 bis 0,5 Gew.-% beträgt, bezogen auf die Summe der Komponenten A), B) und C).

6. Verfahren nach den Ansprüchen 1 bis 5, **dadurch gekennzeichnet, dass** die Umsetzungstemperatur 200 bis 300°C beträgt.

7. Verfahren nach den Ansprüchen 1 bis 6, **dadurch gekennzeichnet, dass** die Umsetzung in einem Extruder stattfindet.

8. Verfahren nach den Ansprüchen 1 bis 7, **dadurch gekennzeichnet, dass** man die Verbindung B) auf das feste Polyamid A) aufbringt, und das derart behandelte Polyamid, ggf. zusammen mit der Kupferverbindung C), im Extruder bei der Umsetzungstemperatur vermischt und die Mischung extrudiert.

9. Verfahren nach den Ansprüchen 1 bis 8, **dadurch gekennzeichnet, dass** das erhaltene hochmolekulare Polyamid eine Viskositätszahl von 120 bis 400 ml/g aufweist, bestimmt gemäß ISO 307 EN an einer 0,5 gew.-%igen Lösung in 96 gew.-%iger Schwefelsäure bei 25°C.

## Claims

1. A process for increasing the molecular weight of polyamides, which comprises reacting a polyamide A) at a temperature of from 150 to 350°C with a compound B) which at this reaction temperature liberates isocyanic acid, or with isocyanic acid which is prepared separately via thermal decomposition of the compound B), where the concentration of the amino end groups in the polyamide A) used is greater than or equal to the concentration of the carboxy end groups and the molar ratio of compound B) to the amino end groups of the polyamide is from 0.3 : 1 to 1.5 : 1.

2. The process according to claim 1, wherein the compound B) has been selected from urea, biuret, triuret, cyanuric acid, silyl carbamate, trimethylsilyl carbamate, trimethylsilylurea, and poly(nonamethylene)urea.

3. The process according to claims 1 and 2, wherein at least 20 mol% of the polymer chains in the polyamide A) have two or more amino end groups.

4. The process according to claims 1 to 3, wherein concomitant use is made of a copper compound C), in addition to components A) and B).

5. The process according to claims 1 to 4, wherein the amount of the copper compound C) is from 0.005 to 0.5% by weight, based on the entirety of components A), B), and C).

6. The process according to claims 1 to 5, wherein the reaction temperature is from 200 to 300°C.

7. The process according to claims 1 to 6, wherein the reaction takes place in an extruder.

8. The process according to claims 1 to 7, wherein the compound B) is applied to the solid polyamide A), and the resultant treated polyamide, if appropriate together with the copper compound C), is mixed in the extruder at the reaction temperature, and the mixture is extruded.

9. The process according to claims 1 to 8, wherein the viscosity number of the high-molecular-weight polyamide obtained is from 120 to 400 ml/g, determined to ISO 307 EN on a 0.5% strength by weight solution in 96% strength by weight sulfuric acid at 25°C.

## Revendications

1. Procédé pour augmenter le poids moléculaire de polyamides, **caractérisé en ce que** l'on fait réagir un polyamide A) à une température de 150 à 350 °C avec un composé B), qui libère de l'acide isocyanique à cette température réactionnelle, ou avec de l'acide isocyanique, que l'on produit séparément par dégradation thermique du composé B), dans lequel la concentration des groupements amino terminaux, dans le polyamide A) utilisé, est supérieure ou égale à la concentration en groupements carboxyle terminaux, et le rapport molaire du composé B) aux groupements amino terminaux du polyamide est de 0,3:1 à 1,5:1.

2. Procédé selon la revendication 1, **caractérisé en ce que** le composé B) est choisi dans le groupe constitué de l'urée, du biuret, du triuret, de l'acide cyanurique, du carbamate de silyle, du carbamate de triméthylsilyle, de la triméthylsilyle-urée et de la poly(nonaméthylène)-urée.

3. Procédé selon les revendications 1 ou 2, **caractérisé en ce que**, dans le polyamide A), au moins 20 % en mole des chaînes polymères présentent deux groupements amino terminaux ou plus.

4. Procédé selon les revendications 1 à 3, **caractérisé en ce que** l'on utilise conjointement un composé de cuivre C), en plus des composants A) et B).

5. Procédé selon les revendications 1 à 4, **caractérisé en ce que** la quantité du composé de cuivre C) représente 0,005 à 0,5 % en poids par rapport à la somme des composants A), B) et C).

6. Procédé selon les revendications 1 à 5, **caractérisé en ce que** la température réactionnelle est de 200 à 300 °C.

7. Procédé selon les revendications 1 à 6, **caractérisé en ce que** la réaction est effectuée dans une extrudeuse.

8. Procédé selon les revendications 1 à 7, **caractérisé en ce que** l'on applique le composé B) sur le polyamide solide A), **en ce que** l'on mélange le polyamide ainsi traité, éventuellement conjointement avec le composé de cuivre C), dans l'extrudeuse à la température réactionnelle et **en ce que** l'on extrude le mélange.

9. Procédé selon les revendications 1 à 8, **caractérisé en ce que** le polyamide de haut poids moléculaire obtenu présente un indice de viscosité de 120 à 400 ml/g, déterminé selon la norme ISO 307 EN sur une solution à 0,5 % en poids préparée dans de l'acide sulfurique à 96 % en poids, à 25 °C.
